# FASCICULE DE BREVET EUROPEEN

(11) **EP 1 309 429 B1**
(45) Date de publication et mention de la délivrance du brevet: **30.05.2007**
(21) Numéro de dépôt: 02760375.2
(22) Date de dépôt: 02.07.2002
(51) Int. Cl.: B25J 9/00, F16F 7/14, B62D 65/00

(54) **PLATE-FORME AVEC FILTRATION DE VIBRATION POUR UNE STATION D'INTERVENTION ROBOTISEE SUR CAISSES DE VEHICULES AUTOMOBILES**
PLATTFORM MIT FILTRATION VON SCHWINGUNGEN FÜR EINE ROBOTISIERTE ANLAGE ZUM BEARBEITEN VON KRAFTFAHRZEUGKÄSTEN
VIBRATION FILTERING PLATFORM FOR A ROBOTIZED ASSEMBLY WORKING ON VEHICLE BODIES

(30) Priorité: 03.07.2001 FR 0108801
(43) Date de publication de la demande: 14.05.2003
(73) Titulaire: Peugeot Citroen Automobiles SA, 92200 Neuilly sur Seine (FR)
(72) Inventeur: RASSON, Didier, F-91140 Villebon S/Yvette (FR); MESSAGER, Robert, F-92290 Chatenay-Malabry (FR); HUBERT, Jean, F-35230 Noyal Chatillon sur Seiche (FR); CRONIER, Edouard, F-77166 Evry Gregy sur Yerres (FR)
(74) Mandataire: Berger, Helmut
(86) Numéro de dépôt international: PCT/FR2002/002298
(87) Numéro de publication internationale: WO 2003/004224

(56) Documents cités:
- WO-A-94/16261
- DE-A- 3 618 223
- DE-U- 20 005 707
- US-A- 4 686 877
- US-A- 5 285 397

## Description

L'invention concerne les stations robotisées d'intervention sur les véhicules automobiles, notamment les stations de mesure de la géométrie des caisses de véhicules automobiles.

Elle s'applique plus particulièrement aux stations de mesure laser destinées à mesurer la géométrie de caisses de véhicules se trouvant dans un flux de production.

On connaît de telles stations, qui consistent sensiblement en un bras articulé portant à son extrémité un capteur optique laser.

On a jusqu'à présent proposé de fixer le bras au sol, le plus fermement possible. Il s'avère toutefois que les sols des usines sont le siège de vibrations nuisibles à la qualité de la mesure optique effectuée par le robot. De telles vibrations sont notamment très élevées dans le cas d'un tronçon de ligne de fabrication placé sur un étage.

L'homme du métier est donc confronté, dans le cadre de l'utilisation de bras robotisés, et notamment de tels bras portant des capteurs optiques, au problème de la présence de vibrations dans le bras qui nuisent à la qualité de l'intervention, notamment à la précision de la mesure optique.

D'autre part, on connaît du document US 5 285 397 une plate-forme pour une station d'intervention , qui inclut des éléments de support déformables pour isoler l'objet à mesurer de certaines vibrations du sol.

L'invention vise, à titre principal, à faciliter un transfert sans heurt de caisses de véhicules automobiles vers ou de la plate-forme. Pour cela, on propose une plate-forme conforme à la revendication 1 et une station d'intervention robotisée sur une caisse de véhicule automobile, conforme à la revendication 2, comprenant une telle plate-forme.

D'autres caractéristiques, buts et avantages de l'invention apparaîtront à la lecture de la description détaillée qui va suivre, faite en référence aux figures annexées sur lesquelles :
- la figure 1 représente un élément-support selon un mode de réalisation de l'invention, pour une plate-forme portant un robot de mesure optique;
- la figure 2 représente ce même élément, lorsqu'il est monté dans la plate-forme et posé au sol ;
- la figure 3 représente, en vue de dessus, un assemblage de maintien de cette même plate-forme contre un déplacement dans son plan ;
- la figure 4 représente, en vue de dessus, la plate-forme munie de moyens similaires à ceux de la figure 3 sur chacun de ses côtés ;
- la figure 5 représente un ensemble de verrouillage de la plate-forme, en position déverrouillée ;

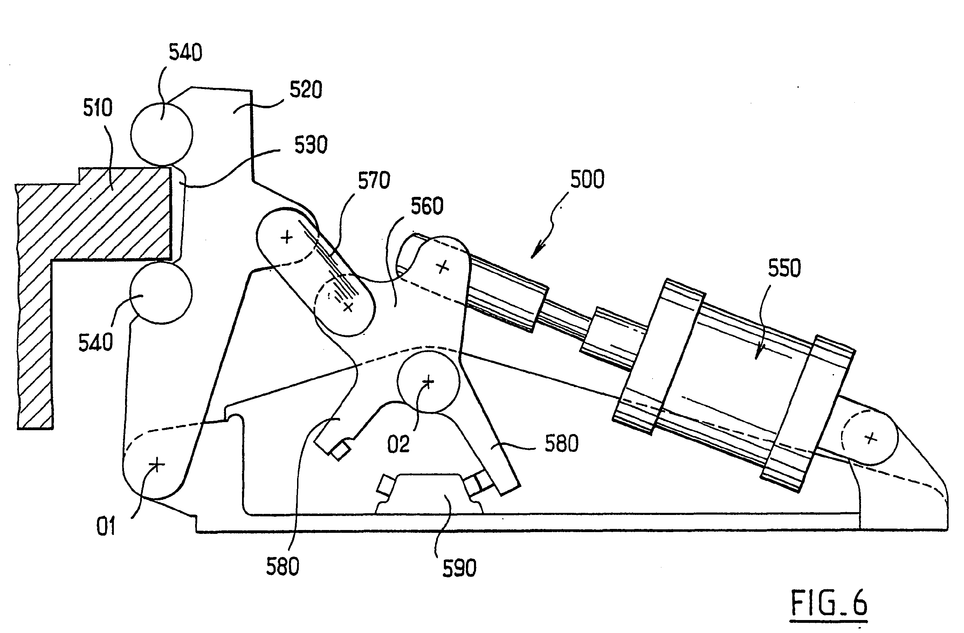

- la figure 6 représente ce même ensemble de verrouillage, en position verrouillée.

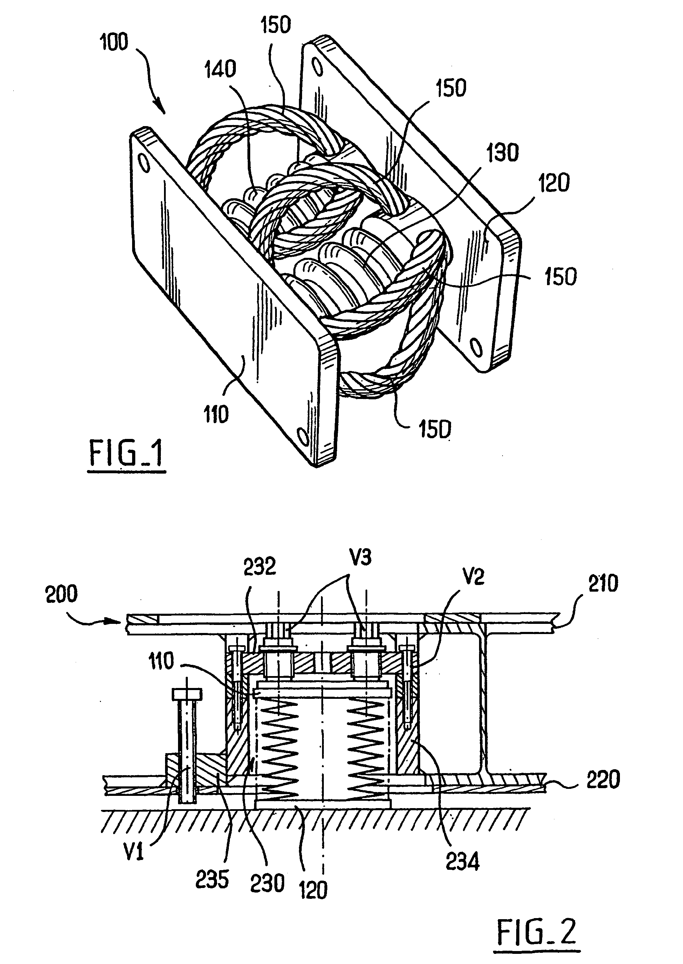

L'élément-support 100 de la figure 1 se compose de deux plaques métalliques parallèles 110 et 120, reliées entre elles par un ensemble mécanique destiné à amortir des vibrations entre ces deux plaques. Ainsi, les deux plaques 110 et 120 sont reliées par deux ressorts hélicoïdaux 130 et 140 placés l'un à côté de l'autre, venant chacun rejoindre à chacune de ses deux extrémités un amas métallique sur une plaque 110 et 120, dans lequel amas il se fond.

Ces amas métalliques sont ici rapportés par mécano-soudage selon une technique bien connue par l'homme du métier.

Chacun des ressorts 130 et 140 présente une élasticité en étirement longitudinal choisie en fonction de la fréquence principale de vibration du sol, et en fonction des fréquences les plus nuisibles pour le travail du robot.

Dans le cas présent, les vibrations du sol sont de 6,75 à 9Hz et les fréquences propres du robot portant un capteur optique laser sont entre 9,75 et 15 Hz.

Les ressorts sont choisis les plus souples possibles, ici avec une fréquence propre en déformation verticale qui est proche de 3,5 Hz. Un calcul par éléments finis a confirmé que, pour le nombre de ressorts total placé sous la plate-forme, l'ensemble constitué de la plate-forme, de son équipage, et de tels ressorts suffisamment souples pour amortir les vibrations, ne présente effectivement pas une fréquence propre proche de la fréquence des vibrations.

Les fréquences propres du plancher, de la structure mécanique du robot et des supports sont préférentiellement différentes les unes des autres.

Ici, les modes propres de la plate-forme sont au-delà de 24Hz, ce qui permet de déduire que ni les vibrations du plancher, ni celles induites par les robots, n'exciteront les modes propres de la plate-forme.

On notera que, pour compléter l'effet d'amortissement élastique produit par les ressorts 130 et 140, l'élément support de la figure 1 présente en outre des éléments 150 d'amortissement par dissipation de mouvement, qui relient également les deux plaques 110 et 120.

Ces câbles 150 ont surtout un rôle d'amortissement en cas de chocs répétés et servent à stabiliser les ressorts 130 et 140 en évitant un emballement de ceux-ci lorsqu'ils travaillent verticalement.

Les câbles sont au nombre de quatre par ressort, s'étendant sensiblement en demi-cercle. Les câbles viennent également se fondre dans l'amas métallique d'extrémité du ressort, fixés avec le ressort par mécano-soudage sur la plaque. Ainsi, chaque ressort 130, 140 est entouré par quatre câbles 150, les quatre câbles formant une forme générale en globe. Les câbles, arqués le long des ressorts, travaillent donc en fléchissement lorsque le ressort est comprimé.

Chaque élément-support tel que celui de la figure 1 forme donc une entité autonome, pouvant être assemblée avec la plate-forme de manière indépendante. La plate-forme décrite ici présente seize éléments-supports, semblables à celui-là, répartis d'une manière uniforme.

On a représenté à la figure 2 l'élément-support précédemment décrit, en situation dans une plate-forme associée 200. La plate-forme partiellement représentée se compose principalement de deux plaques parallèles 210 et 220 rigidement liées entre elles selon un espacement du même ordre de grandeur que la hauteur de l'élément-support. Entre ces deux plaques 210 et 220 est aménagé un logement 230 pour l'élément-support, appelé ci-après « chapeau ». Le chapeau 230 présente un fond 232, une paroi circonférentielle 234 et une bordure 235 à sa base, à la manière d'un chapeau « haut de forme ».

Cette bordure 235 est fixée sur la plaque inférieure 220 de la plate-forme 200 par tout moyen approprié. Le fond 232 du chapeau, qui s'étend entre les deux plaques 210 et 220 de la plate-forme, est, lui, assemblé par vissage avec la paroi circonférentielle 234 du chapeau par les vis V2. Ce fond de chapeau 232 est placé à une hauteur qui est choisie de telle sorte que l'élément-support dépasse légèrement en dessous de la plaque inférieure 220 de la plate-forme.

La plaque inférieure 120 de l'élément support repose donc sur le sol tandis que la plaque supérieure 110 de l'élément-support est liée au fond 232 du chapeau. Cette dernière liaison est assurée par l'intermédiaire de deux vis verticales V3. Ces vis V3 constituent également, par un aménagement de pas de vis simple, un moyen de tarage des ressorts de l'élément-support.

On voit encore sur la figure 2 des vis verticales V1 passant à travers la bordure 235 du chapeau et la plaque inférieure 220 de la plate-forme.

Ces vis V1 servent à la mise en place de la plate-forme de la manière suivante :

Dans un premier temps, elles sont vissées de manière à dépasser de la face inférieure de la plate-forme et cette dernière repose sur le sol uniquement par l'intermédiaire de ces vis V1. On met ensuite en place les éléments supports 100 dans leurs logements et on dévisse les vis V1 jusqu'à ce que la plate-forme repose sur le sol uniquement par l'intermédiaire des éléments-supports, les vis devant être suffisamment éloignées du sol pour ne pas interférer avec la suspension et permettre aux éléments supports d'assurer pleinement leur fonction anti-vibrations.

La plate-forme est parfaitement isolée du sol en matière de vibrations, formant ainsi un « marbre flottant », les éléments-supports formant des suspensions. La plate-forme pèse ici 34 tonnes, et porte de plus un équipage d'environ le même poids (ici quatre robots et leurs socles en béton, et les outillages de mise en référence de la caisse reçue).

Un tel caractère « flottant » est ici limité pour ne pas gêner les mesures et les interventions du personnel. Pour empêcher un large flottement de la plate-forme dans son plan, on adopte une série de quatre emboîtements 300 entre le sol et la plate-forme.

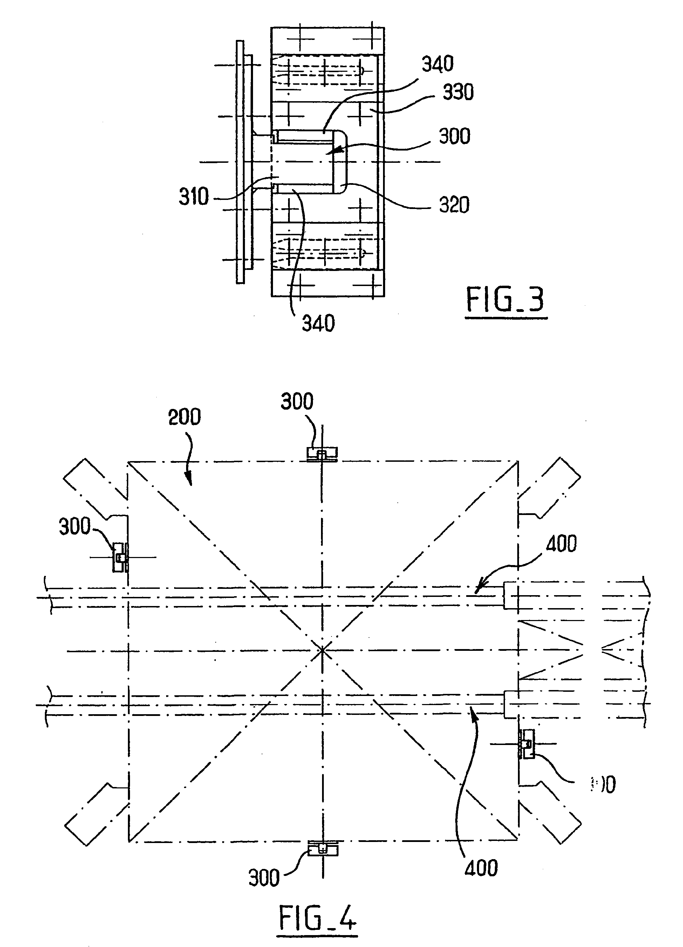

Ainsi, telle que représentée à la figure 3 et à la figure 4, la plate-forme présente sur chacun de ses côtés une protubérance 310 vers l'extérieur, emboîtée dans une cavité 320 prévue dans un bloc 330 lié au sol.

Les dimensions respectives de la protubérance 310 et de la cavité 320 sont choisies pour que cette protubérance 310 soit à distance des parois internes de la cavité 320 sur l'ensemble de son pourtour et notamment devant son extrémité à l'intérieur de la cavité.

La cavité 320 est en outre tapissée, face aux cotés de la protubérance qui sont perpendiculaires au sol, par une couche élastomère 340 qui s'oppose élastiquement à des déplacements horizontaux de la plate-forme.

L'élasticité de cette couche élastomère 340 est choisie pour autoriser de faibles déviations de la plate-forme dans son plan, de sorte que des vibrations horizontales soient tout de même légèrement amorties. Ici la plate-forme est maintenue dans une amplitude de déplacements horizontaux d'environ 2,5 mm.

On notera cependant que chaque protubérance 310 est laissée nue dans sa portion supérieure et inférieure, de sorte que les moyens d'emboîtement ne s'opposent pas à des déplacements verticaux, sens de déplacement où les éléments-support jouent leur rôle dynamique,

Dans le cas présent, le transport des caisses est effectué sur chariot, grâce à des rails qui s'étendent à la fois sur le sol et sur la plate-forme et constituant une voie 400 de guidage en déplacement des caisses (fig.4). Ces rails doivent être parfaitement alignés au transfert de la caisse.

Les éléments-supports, par leur caractère souple, laissent une certaine incertitude sur le positionnement horizontal de la plate-forme, incertitude qui ne permet pas de garantir l'alignement des rails de transport.

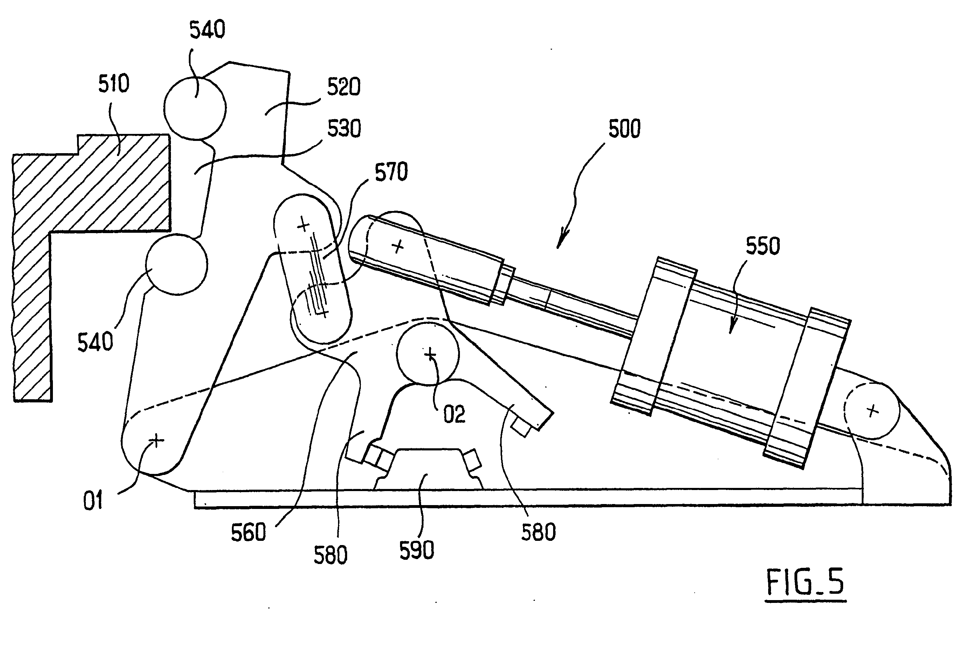

Pour faciliter un transfert sans heurt, on propose dans ce mode de réalisation une série d'aménagements de de verrouillage 500 de la plate-forme à une hauteur choisie (figs 4 et 5). Chaque aménagement de de verrouillage 500 est constitué d'une protubérance 510 venue de la plate-forme et d'un bras rotatif 520 venu du sol et formant moyen d'encadrement 530 pour la protubérance 510.

Le bras rotatif 520, monté à rotation sur une base au sol autour de l'axe fixe 01, vient ainsi, par un de ses côtés, recevoir la protubérance 510 en l'encadrant entre deux galets 540 glissés en faces supérieure et inférieure de la protubérance.

Ce bras est actionné à l'aide d'un vérin 550 par l'intermédiaire d'un élément rotatif supplémentaire 560 également lié au sol et monté rotatif autour de l'axe fixe 02. Une biellette 570 relie ce dernier élément rotatif au bras rotatif 520 précédemment mentionné. L'élément rotatif supplémentaire 560 est ainsi relié à la fois au vérin 550 et, par la biellette 570, au bras d'encadrement 520, au niveau de deux points excentrés de ces éléments rotatifs.

La rotation de l'élément rotatif supplémentaire 560 sous l'effet du vérin 550 provoque un décalage de la biellette 570 en rapprochement/éloignement de l'axe de rotation du bras d'encadrement 520. Ce déplacement de la biellette 570 engendre une traction ou une poussée au dos du bras d'encadrement 520, qui l'éloigne ou le rapproche de la protubérance 510.

On notera également que l'élément rotatif supplémentaire 560 présente deux bras 580 aptes à venir en contact respectivement avec deux butées prévues sur un socle 590 fixé au sol, butées qui interviennent dans deux positions respectives d'extrémité correspondant aux positions verrouillée et déverrouillée de la plate-forme.

Ainsi, le déplacement en hauteur de la plate-forme est empêché solidement à chaque transfert de caisse. De plus, au verrouillage, les galets 540 viennent glisser, de part et d'autre de la protubérance 510, et la recalent en hauteur dans une position précise. La plate-forme est au final ajustée au moins en hauteur, de sorte que les portions de rails viennent s'aligner.

## Revendications

1. Plate-forme pour une station d'intervention robotisée pour caisses de véhicules automobiles, incluant des éléments de support (100) sur le sol qui sont de type déformable, de manière à amortir une vibration du sol, **caractérisée en ce qu'**elle inclut des moyens de verrouillage (500) actionnables aptes, en position verrouillée, à fixer rigidement la plateforme (200) par rapport au sol. de la plate-forme (200)

2. Station d'intervention robotisée sur une caisse de véhicule automobile, comprenant un robot et une plate-forme (200) selon la revendication 1 portant ce robot.

3. Station selon la revendication 2, **caractérisée en ce qu'**elle Inclut une vole (400) de guidage en déplacement des caisses de véhicule qui s'étend sur la plate-forme (200) pour une part, et au-delà de la plate-forme (200) pour une autre part, et **en ce que** les moyens de verrouillage (500) de la plate-forme (200) sont disposés de telle sorte que les parties en plate-forme (200) et hors plate-forme de cette voie (400) soient alignées l'une avec l'autre en position verrouillée des moyens de verrouillage (500).

4. Station selon la revendication 2 ou la revendication 3, **caractérisée en ce que** les moyens de verrouillage de la plate-forme (200) comprennent deux éléments d'emboîtement mutuel (510, 530) solidaires respectivement de la plate-forme (200) et du sol, et **en ce que** les moyens de verrouillage (500) incluent un bras rotatif (520) qui porte un des éléments d'emboîtement (530).

5. Station selon la revendication précédente, **caractérisée en ce que** les moyens de verrouillage (500) de la plate-forme (200) incluent un élément rotatif supplémentaire (560) au bras rotatif (520), le bras rotatif (520) et l'élément rotatif supplémentaire (580) ayant chacun une partie excentrée par rapport à leur axe de rotation respectif, les parties excentrées des deux éléments rotatifs étant reliées entre elles par une biellette (570).

6. Station selon la revendication précédente, **caractérisée en ce que** les moyens de verrouillage (500) de la plate-forme (200) incluent un vérin (550) relié par une extrémité au sol et par son autre extrémité en un point excentré de l'élément rotatif supplémentaire (560).

7. Station selon l'une quelconque des revendications 2 a 6, **caractérisée en ce que** les éléments de support (100) déformables de la plate-forme (200) incluent des moyens de dissipation de mouvement (150).

8. Station selon la revendication précédente, **caractérisée en ce que** les moyens de dissipation de mouvement (150) sont formés par des câbles.

9. Station selon l'une quelconque des revendications 2 à 8, **caractérisée en ce que** la plate-forme (200) inclut une série d'éléments-supports (100) unitaires et désolidarisables de la plate-forme (200) et du sol, chacun de ces éléments-supports (100) incluant au moins un élément élastique (140) et au moins un élément de dissipation de mouvement (150).

10. Station selon la revendication 9, **caractérisée en ce que** chaque élément de support (100) inclut deux plaques parallèles (110,120), au moins un ressort hélicoïdal (130. 140) reliant ces deux plaques (110, 120) et constituant ledit élément élastique et au moins un câble courbé (150) reliant les deux plaques (110, 120) et constituant ledit élément de dissipation de mouvement.

11. Station selon la revendication 10, **caractérisée en ce que** chaque élément-support (100) présente une série de câbles (150) courbés disposés autour du ou des ressorts (130, 140) hélicoïdal(aux), les câbles étant courbés en éloignement du ou des ressorts hélicoïdal(aux) (130, 140).

12. Station robotisée selon l'une quelconque des revendications 2 à 11 précédentes, **caractérisée en ce que** le robot est un robot de mesures géométriques de caisses de véhicules automobiles.

## Claims

1. A platform for a robotized assembly working on a motor vehicle body, including supporting members (100) on the ground which are of the deformable type, so as to damp vibration of the ground, **characterized in that** it includes actuatable locking means (500) in a locked position, for rigidly attaching the platform (200) relatively to the ground.

2. A robotized assembly working on a motor vehicle body, comprising a robot and a platform (200) according to claim 1, bearing this robot.

3. The assembly according to claim 2, **characterized in that** it includes a guiding track (400) for displacing vehicle bodies, which extends over the platform (200) on the one hand, and beyond the platform (200) on the other hand, and **in that** the locking means (500) of the platform (200) are positioned so that the platform (200) and off-platform portions of this track (400) are aligned with each other in a locked position of the locking means (500).

4. The assembly according to claim 2 or claim 3, **characterized in that** the locking means of the platform (200) comprise two mutually interlocking members (510, 530) firmly attached to the platform (200) and to the ground, respectively, and **in that** the locking means (500) include a rotary arm (520), which bears one of the interlocking members (530).

5. The assembly according to the preceding claim, **characterized in that** the locking means (500) of the platform (200) include an additional rotary member (560) to the rotary arm (520), the rotary arm (520) and the additional rotary member (560) which having an excentered portion relatively to their respective axis of rotation, the excentered portions of both rotary members being connected together through a small connecting rod (570).

6. The assembly according to the preceding claim, **characterized in that** the locking means (500) of the platform (200) include a power cylinder (550) connected through one end to the ground and through its other end to an excentered point of the additional rotary member (560).

7. The assembly according to any of claims 2 to 6, **characterized in that** the deformable supporting members (100) include motion-damping means (150).

8. The assembly according to the preceding claim, **characterized in that** the motion-damping means (150) are formed by cables.

9. The assembly according to any of claims 2 to 8, **characterized in that** the platform (200) includes a series of support member units (100) detachable from the platform (200) and from the ground, each of these support members (100) including at least one elastic member (140) and at least one motion-damping member (150).

10. The assembly according to claim 9, **characterized in that** each supporting member (100) includes two parallel plates (110, 120), at least one helical spring (130, 140) connecting both of these plates (110, 120) and forming said elastic member and at least a bent cable (150) connecting both plates (110, 120) and forming said motion-damping member.

11. The assembly according to claim 10, **characterized in that** each support member (100) has a series of bent cables (150) positioned around helical spring(s) (130, 140), the cables being bent away from the helical spring(s) (130, 140).

12. The assembly according to any of claims 2 to 11, **characterized in that** the robot is a robot for geometrical measurements of bodies of motor vehicles.

## Patentansprüche

1. Plattform für eine robotisierte Anlage zum Bearbeiten von Kraftfahrzeugkästen, Elemente (100) zur Abstützung auf dem Boden verformbaren Typs einschließend, um eine Bodenvibration zu dämpfen, **dadurch gekennzeichnet, dass** sie betätigbare Verriegelungsmittel (500) einschließt, die in verriegelter Stellung in der Lage sind, die Plattform (200) in bezug auf den Boden starr zu fixieren.

2. Robotisierte Anlage zum Bearbeiten eines Kraftfahrzeugkastens, einen Roboter und eine diesen Roboter tragende Plattform (200) nach Anspruch 1 umfassend.

3. Anlage nach Anspruch 2, **dadurch gekennzeichnet, dass** sie einen Führungsweg (400) in Verschiebung der Fahrzeugkästen einschließt, der sich einerseits über die Plattform (200) und andererseits über die Plattform (200) hinaus erstreckt, und **dadurch**, dass die Verriegelungsmittel (500) der Plattform (200) derart angeordnet sind, dass die Teile in der Plattform (200) und außerhalb der Plattform dieses Wegs (400) in Verriegelungsstellung der Verriegelungsmittel (500) aneinander ausgerichtet sind.

4. Anlage nach Anspruch 2 oder Anspruch 3, **dadurch gekennzeichnet, dass** die Verriegelungsmittel der Plattform (200) zwei Elemente gegenseitiger Ineingriffnahme (510, 530) umfassen, die jeweils mit der Plattform (200) und dem Boden verbunden sind, und **dadurch**, dass die Verriegelungsmittel (500) eine Rotationsarm (520) einschließen, der eines der Elemente zur Ineingriffnahme (530) trägt.

5. Anlage nach vorangehendem Anspruch, **dadurch gekennzeichnet, dass** die Verriegelungsmittel (500) der Plattform (200) zusätzlich zum Rotationsarm (520) ein Rotationselement (560) einschließen, wobei der Rotationsarm (520) und das zusätzliche Rotationselement (560) jeweils einen in bezug zu ihrer jeweiligen Rotationsachse außermittigen Teil aufweisen, wobei die außermittigen Teile der zwei Rotationselemente untereinander durch eine Pleuelstange (570) verbunden sind.

6. Anlage nach vorangehendem Anspruch, **dadurch gekennzeichnet, dass** die Verriegelungsmittel (500) der Plattform (200) einen Zylinder (550) umfassen, der durch ein Ende mit dem Boden und durch sein anderes Ende mit einem außermittigen Punkt des zusätzlichen Rotationselements (560) verbunden ist.

7. Anlage nach einem der Ansprüche 2 bis 6, **dadurch gekennzeichnet, dass** die verformbaren Abstützelemente (100) nach Anspruch 1 Mittel zur Ableitung von Bewegung (150) einschließen.

8. Anlage nach vorangehendem Anspruch, **dadurch gekennzeichnet, dass** die Mittel zur Ableitung von Bewegung (150) durch Kabel gebildet werden.

9. Anlage nach einem der Ansprüche 2 bis 8, **dadurch gekennzeichnet, dass** die Plattform (200) eine Reihe einzelner, von der Plattform (200) und dem Boden lösbare Abstützelemente (100) einschließt, wobei jedes dieser Abstützelemente (100) mindestens ein elastisches Element (140) und mindestens ein Element zur Ableitung von Bewegung (150) einschließt.

10. Anlage nach Anspruch 9, **dadurch gekennzeichnet, dass** jedes Abstützelement (100) zwei parallele Platten (110, 120), mindestens eine diese zwei Platten (110, 120) verbindende und das besagte elastische Element bildende Spiralfeder (130, 140) und mindestens ein gebogenes, die zwei Platten (110, 120) verbindendes und das besagte Element zur Ableitung von Bewegung bildende Kabel (150) einschließt.

11. Anlage nach Anspruch 10, **dadurch gekennzeichnet, dass** jedes Abstützelement (100) eine Reihe gebogener Kabel (150) aufweist, die um die Spiralfeder oder -federn (130, 140) angeordnet sind, wobei die Kabel in Verlängerung der Spiralfeder(n) (130, 140) gebogen sind.

12. Robotisierte Anlage nach einem der Ansprüche 2 bis 11, **dadurch gekennzeichnet, dass** der Roboter ein Roboter zur geometrischen Messung von Kraftfahrzeugkästen ist.
